# EUROPEAN PATENT APPLICATION

(11) **EP 0 887 586 A2**
(43) Date of publication of application: **30.12.1998**
(21) Application number: 98202059.6
(22) Date of filing: 19.06.1998
(51) Int. Cl.: F21S 1/02, F21V 33/00, G06F 1/16

(54) **Lighting device for environments provided with video terminals**

(30) Priority: 27.06.1997 IT MI971534; 12.03.1998 IT MI980502
(71) Applicant: Beghelli S.p.A., 40050 Monteveglio, Bologna (IT)
(72) Inventor: Beghelli, Gian Pietro, 40050 Monteveglio (Bologna) (IT)
(74) Representative: Zanardo, Giovanni

(57) **Abstract**

A device (30) to be placed on the upper surface of the display screen ( 20) of a computer (10) and suitable to properly light the environments provided with video terminals, said device emitting three controlled light beams, which are directed, respectively, on the sides of the display screen (20) and on the keyboard (15) of the computer (10).

The side light beams are obtained by moving two moving and extendible tabs (25, 26), provided with inner blades (27).

Alternatively, the lighting device (30) can be integral with the video terminal (201) of a computer (10), according to various embodiments.

## Description

The present invention refers to a lighting device for environments provided with video terminals, as for instance the working environments.

The spreading of working environments provided with video terminals is in rapid expansion in all working processes. On this subject, several studies have shown that the major problems related with the use of the video terminals can be eyes fatigue, muscles and skeleton troubles, stress; all these inconveniences are not a necessary consequence of working at the video terminals, but, in general, said inconveniences are the result of an inadequate design of the working stations and of the working processes and they can be prevented not only through the ergonomic principle application, but also through the use of a correct lighting system. Also the national and international regulations have adopted such needs, by making mandatory certain requirements regarding the lighting of working stations provided with video terminals, as for instance the elimination of direct glare, of reflections or of excessive contrast. The prior art discloses substantial elements to define a correct lighting in terms of lighting and/or luminance ratios between the computer screens, the working area, the background and the environment.

In fact, an indirect beam of suffused light, designed to reduce the eyes fatigue, which is generally due to the strong contrast between the screen luminosity and the environment darkness, allows a clearer and more comfortable sight of the typed characters, in comparison to an indirect and strong lighting or in comparison to an insufficient lighting.

Then, a purpose of the present invention is to provide a lighting device for environments provided with video terminals, in particular for working environments, said device shall allow a proper sight of the display screen of the computers, and shall avoid the onset of physical and psychological problems in those users obliged to work with said devices for extended periods of time in unfavourable lighting conditions of the surrounding environment.

Another purpose of the present invention is to provide a lighting device to be placed above the screen of the video terminals and provided with light sources, which can be automatically turned on when the computer is turned on or can be turned on and off by the user. A further purpose of the present invention is to disclose a lighting device for environments provided with video terminals, wherein said device meets the requirements provided for by the national and international regulations about workplace safety.

A further purpose of the invention is to disclose a lighting device for environments provided with video terminals, wherein said device is easy and economical to manufacture, without using complex technologies or expensive raw materials.

This and other purposes are achieved by a lighting device according to claim 1, which is taken as reference. Advantageously, the lighting device of the present invention is suitable to be positioned on the screen of any computer, wherein said device is simply connected to the 230 V alternate current power grid, through a feeding cable provided with a standard plug.

Alternatively, the device according to the invention can be directly integrated with the video terminal of the computer.

Further, in a preferred but non-limiting embodiment of the invention, said device comprises two fluorescent light sources, at low light intensity, which softly and indirectly lights the environment wherein the video terminal screen is located.

The intensity, the spectrum, the luminance and the radiation diagram of the light sources are purposely designed to light the areas on the sides of the screen and the keyboard of the computer and therefore they will allow a reduction in the eyes fatigue during the working time.

Such lighting device allows the emission of three controlled light beams, directed downwards on the sides of the video terminal screen and on the keyboard, respectively.

The side light beams are obtained through the passage of a light radiation inside two extendible projections, provided with blades.

Further purposes and advantages of the present invention will be clear from following description and from the attached drawings, provided as a mere non limiting example, in which:
- Figure 1 is a frontal view of a computer, comprising a display screen, on which a lighting device is placed according to a first embodiment of the present invention;
- Figure 2 is a perspective view of a lighting device, according to the present invention, in its rest position;
- Figure 3 is a perspective view of a lighting device, according to the present invention, in a working position;
- Figure 4 is a frontal view, in partial section, of a lighting device, according to the present invention;
- Figure 5 is a side view of a lighting device according to the present invention;
- Figure 6 is a top view, in partial section, of a lighting device, according to the present invention;
- Figure 7 is a sectional view of Figure 6, along line VII-VII;
- Figure 7A shows a shaped element provided inside the lighting device, according to the present invention;
- Figure 7B is a bottom view of the element of Figure 7A, according to the invention;
- Figure 7C is a Cartesian diagram which graphically shows the lighting levels on the working area obtained through the use of a lighting device, according to the present invention, in function of the light flow by surface unit;
- Figures 8 and 9 are two perspective views of a second embodiment of a lighting device, according to the present invention, wherein said device is integral with the video terminal of a computer;
- Figures 10 and 11 are two perspective views of a third embodiment of a lighting device, according to the present invention, wherein said device is integral with the video terminal of a computer;
- Figures 12 and 13 are two perspective views of a fourth embodiment of a lighting device, according to the present invention, wherein said device is integral with the video terminal of a computer;
- Figure 14 and 15 are two perspective views of a fifth embodiment of a lighting device, according to the present invention, wherein said device is integral with the video terminal of a computer.

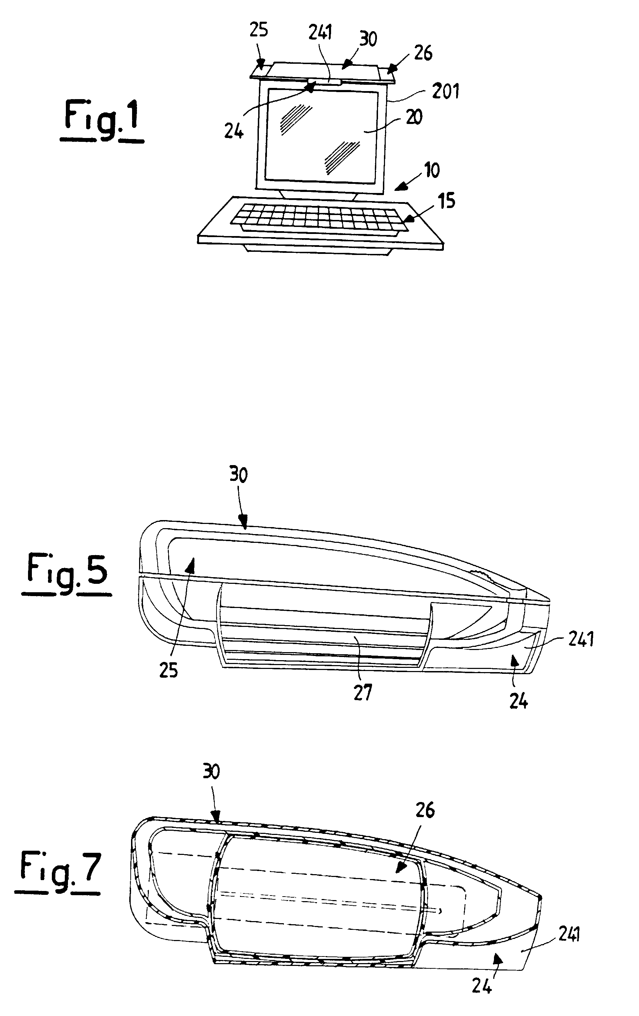

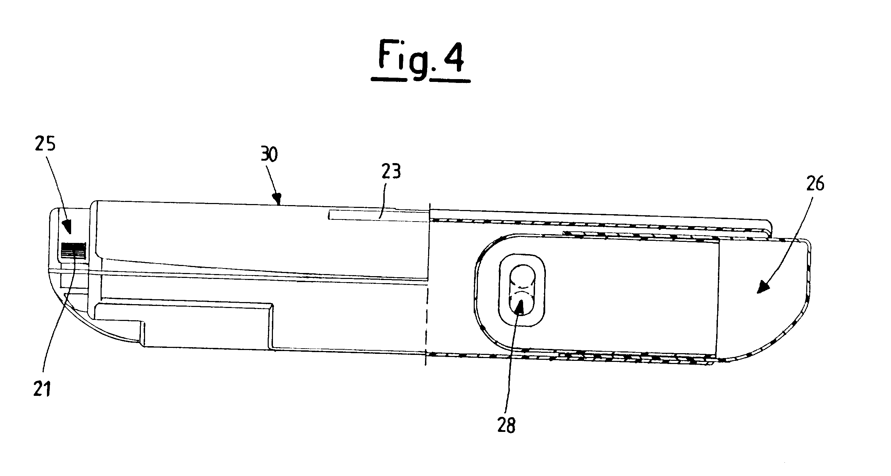

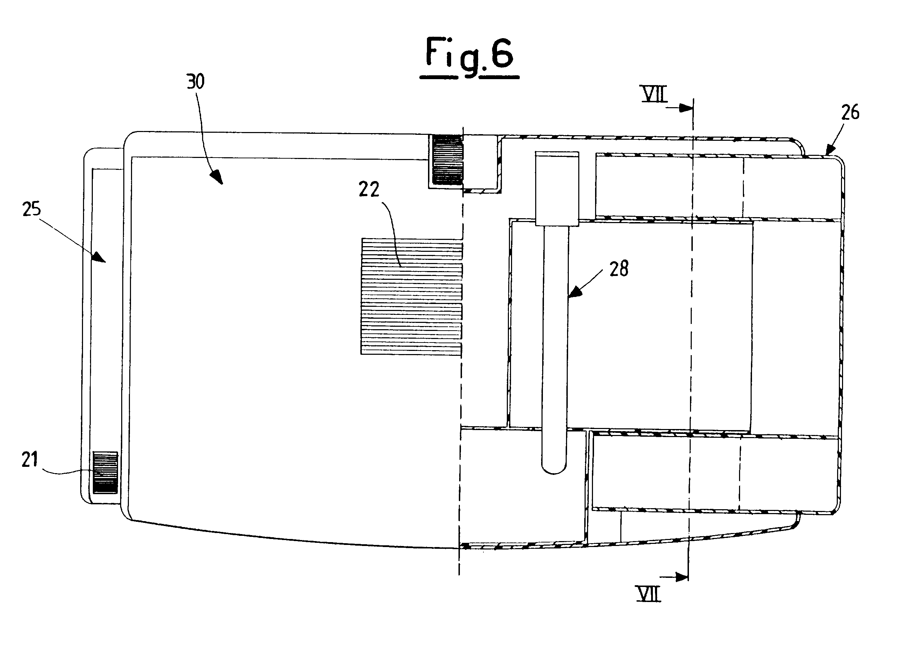

In particular, with reference to Figures 1-7, numeral 10 indicates a computer, provided with a video terminal 20 and possibly with a keyboard 15, numeral 30 indicates, generally, a lighting device for environments provided with video terminals, according to the present invention, said device having a substantially rectangular and flat geometry and being preferably made of plastic material, while numerals 25 and 26 indicate two extendible tabs, which, in their rest position, are placed inside the structure of the device (30) and, in working positions, said tabs extending laterally, in opposite directions, in such a way that the length of the device (30) is longer than the width of the display screen (20), according to a preferred embodiment of the present invention.

Numeral 24 indicates a slot, which has an oval shape and which is positioned below the device (30) on an elongated projection 241 of said device, said projection extends towards the working station of the computer 10, numeral 23 indicates an indication light of the working status, numeral 21 indicates the manual adjustment means of the blades 27, positioned inside the tabs 25, 26, numeral 22 indicates a grate suitable to cool the electric circuit provided inside the device (30), while numeral 27 indicates, generally, a plurality of blades, with which the tabs 25, 26 are endowed, said blades forming a profile comprising prismatic configurations suitable to properly diffuse the light. Finally, numeral 28 indicates two fluorescent light sources, at low or medium luminance, which can be positioned in more than one place inside the device 30 and are preferably positioned in a central area of said device, near the cooling grate 22 and the slot 24, or attached to and integral with the tabs 25, 26.

The light sources 28 light with a suffused light the environment wherein the display screen 20 is placed, thus allowing a reduction of the eyes fatigue while seeing the typed characters, thanks to specific intensity, luminance emission spectrum and diagram of the diffused electromagnetic radiation, said parameters having been purposely studied.

In a non limiting example of a preferred embodiment of the present invention, the light sources 28 are formed by a U-shaped fluorescent tube, which emits the electromagnetic radiation in two straight directions, starting from each end of the U, said ends acting almost as punctiform sources.

Alternatively, two traditional fluorescent lamps may be used as light sources 28, which are placed inside the device 30 substantially in a central area near the cooling grate 22 and to the oval slot 24.

The position of the light sources 28, i.e. of the U-shaped tube ends is such that the two light beams, emitted from the U ends, are directed, parallel to each other, from opposite directions, starting from a central area of the device 30 so as to reach, respectively, the tabs 25, 26 and, further, an additional third light beam, coming from one of the two tube ends or from one of the light sources 28, is directed towards the keyboard 15 of the computer 10, and passes through the slot 24. By using the phenomenon of the light reflection, since the tabs 25, 26 have at least one fully light absorbent inner wall and, for the rest, light reflecting inner walls, the diffused light beam is forced to follow, from the point of the radiation emission, a 90° path according to a straight direction parallel to the longitudinal dimension of the device 30, up to the tabs 25, 26 and therefrom, in perpendicular direction, down to the working surface of the working station.

Preferably, each tab 25 or 26 has a shaped element 40, which is fixed, by means of pins 41 and seats 42, positioned in a support means 45, to the inner walls of said tab 25, 26 and said element comprises a series of blades 27 parallel to each other and connected through a first longitudinal element 44 curved in the shape of a parabola, suitable to direct the light radiation and through a second flat longitudinal element 43 designed so as to absorb at least partially the light radiation. The blades 27, the support element 45 and the longitudinal elements 43 and 44 realise proper prismatic configurations, suitable to diffuse, when the radiation passes through, a light beam in a manner particularly relaxing and agreeable.

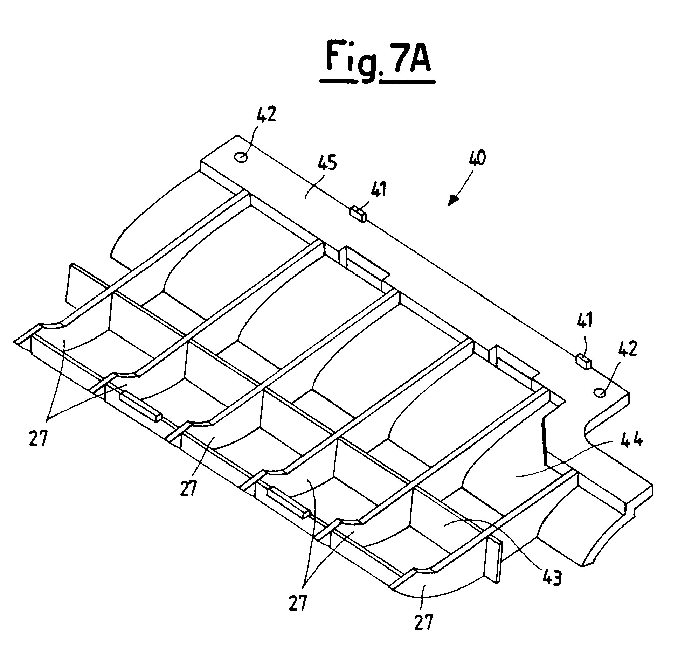

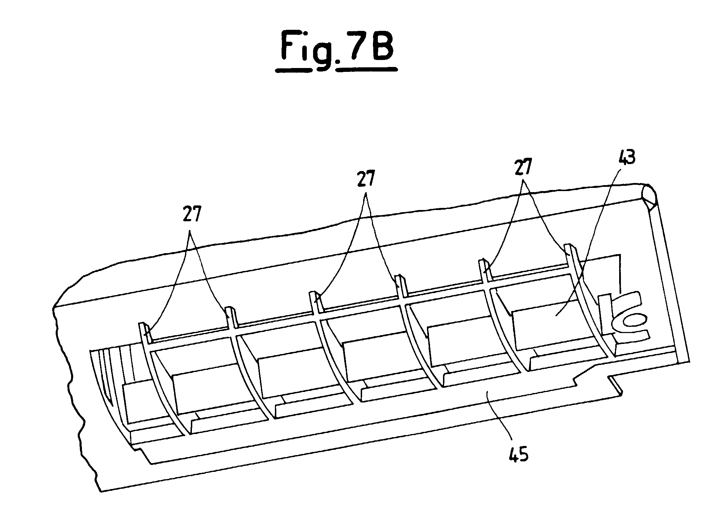

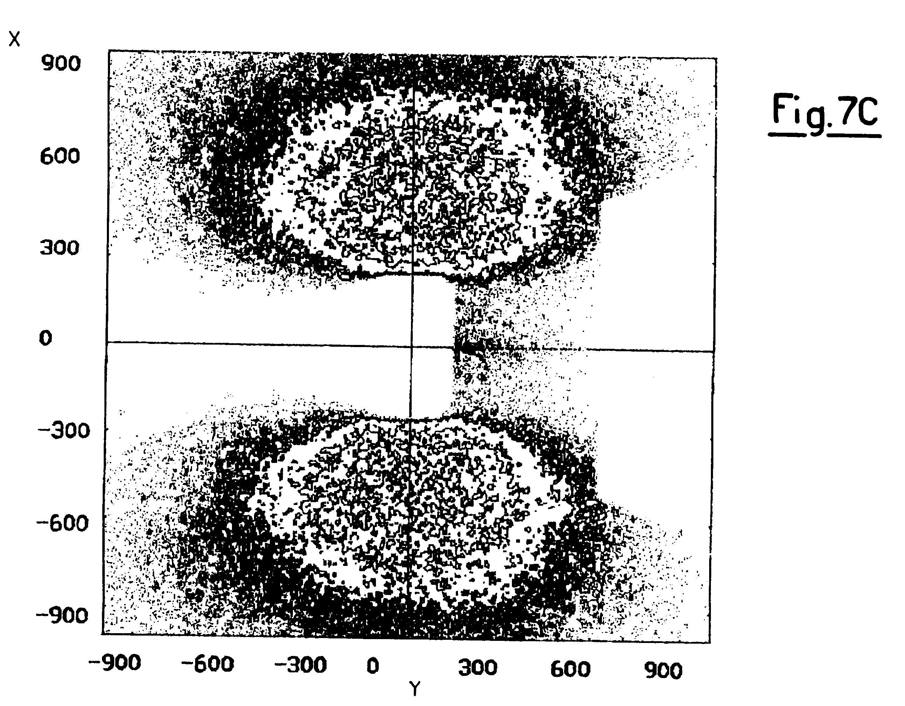

In particular, lighting levels are obtained on the working surface, as shown in Figure 7C, wherein the light beam, quality wise and quantity wise, is indicated per square meter of working surface hit by the light radiation coming out from the device 30.

Alternatively, two fluorescent light sources 28 can be provided, each one placed inside a corresponding tab 25, 26, so that the light radiation is diffused through the prismatic configurations of the blades 27 and a light source contained inside the device 30, in the position corresponding to the oval slot 24, in such a way that the light beam is directed vertically towards the working surface.

A feeding cable, not shown, of the lighting device 30 connects said device 30 to the alternate current power grid at 230 V by means of plug 50; further, the pilot light 23 can be provided with a push-button to manually turn on the light sources 28.

After having positioned the device 30 on the display screen 20 of the computer 10, as shown in figure 1, the user turns on the light sources 28 through a manual control; alternatively, the light sources 28 can be provided to automatically turn on when the terminal is turned on, through known electronic circuits.

At this point, the tabs 25, 26, usually folded inside the device 30, in their rest position, extend longitudinally, on opposite sides, for a predetermined length, in such a way that their lower portions, provided with the blades 27, project from the sides of the display screen 20 and therefore allow the diffusion of the light, coming from the inner light sources 28, along the vertical direction. The movement of the blades 27 is obtained automatically, through traditional electric controls or it can be manually controlled by the user, even at discrete ranges with as small an extension as it is required, through specific adjustment means 21, placed on the body of the device 30 and/or on each tab 25, 26. Further, the tabs 25, 26 have an asymmetric inner configuration and they have a geometry which is designed by taking into account the most significant feature of the tabs, i.e. that of collecting and diffusing the suffused radiation along the vertical sides of the display screen 20 and towards the keyboard 15.

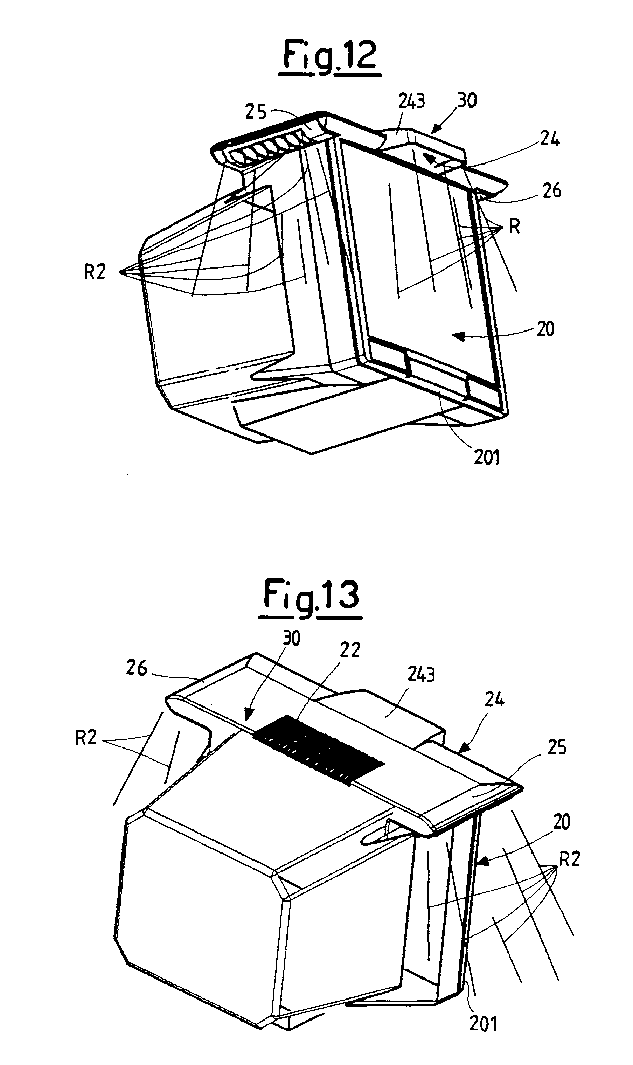

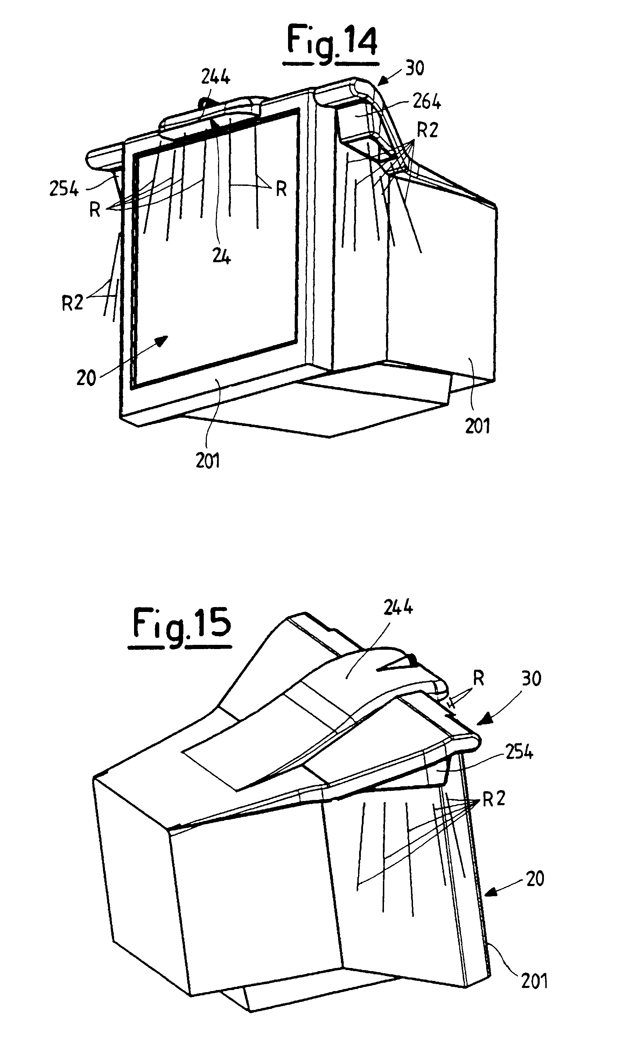

Finally, according to Figures 12, 13 and 14, 15, the lighting device 30, according to the present invention, instead of being placed on the upper portion of the display screen 20 of a computer 10, can be constituted of a portion of the video terminal itself 201, said portion being positioned on the upper portion of said terminal and integral therewith (see Figures 12 and 13) and/or designed according to the specific geometry of the upper base of the video terminal 201 (see figures 14 and 15); said lighting device 30 is manufactured as an integral part of the video terminal 201 and the light beams are directed in a vertical direction, along the directions of the rays R and R2, starting, respectively, from the oval slot 24 obtained in the elongated projections 243 (Figures 12, 13) or 244 (Figures 14, 15) and from each area positioned below the tabs 25, 26 (Figures 12, 13) or 254, 264 (Figures 14, 15).

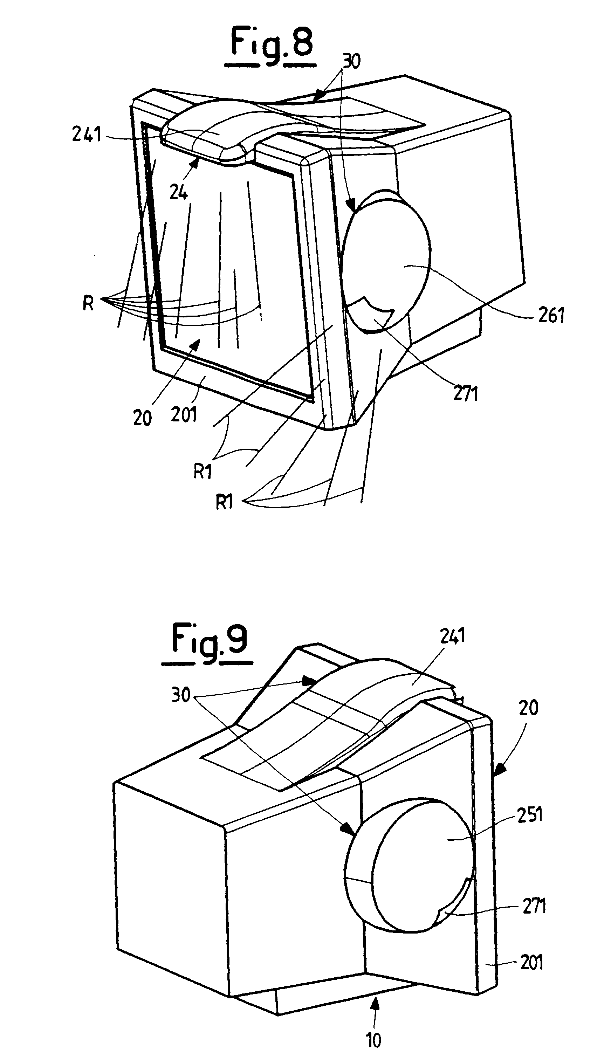

Alternative embodiments, besides the embodiments shown in Figures 12-15, are shown in Figures 8-11; in particular, in Figures 8 and 9, numeral 241 indicates an elongated projection, manufactured as an integral part with the video terminal 201 and designed in such a way that said projection is integral with the upper portion of the video terminal 20 and slightly extends towards the working area of the user; in this extended portion, said projection is provided with an oval slot 24, from which the light rays R come out and light, following a vertical path, the working area and, therefore, the keyboard 15 of the computer 10.

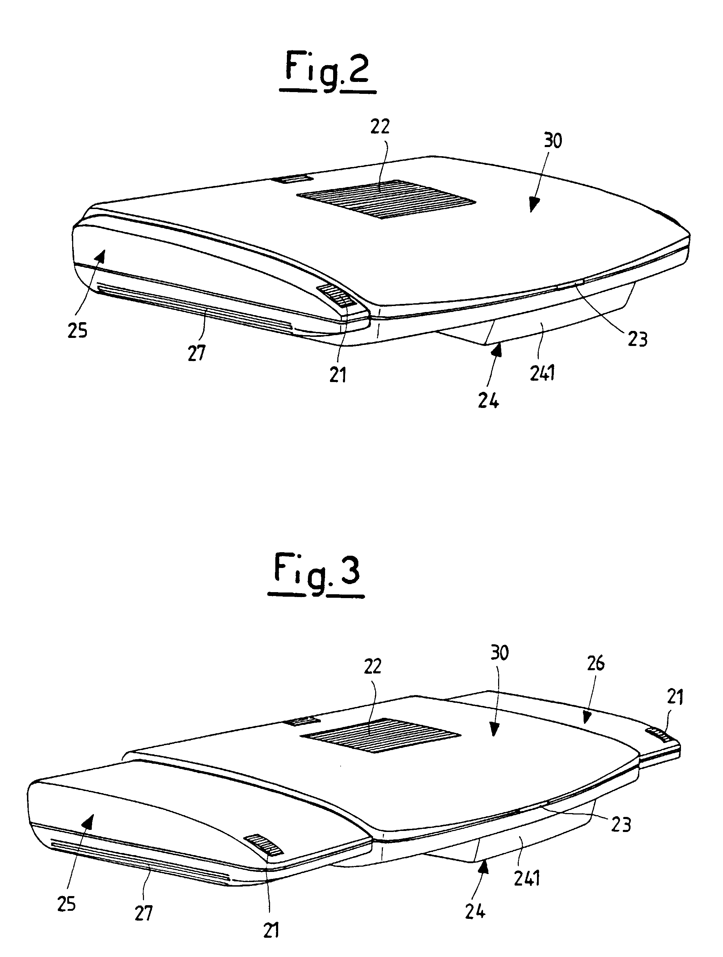

The lighting on the sides is obtained through the presence of two bodies 251, 261, preferably of spherical shape, said bodies having the same function of the tabs 25, 26 of the device 30 of Figure 3.

Inside each body 251, 261 there is a light source, and the emitted rays R1 come out through a small transparent window 271, positioned along the outer perimeter; further, the rays R1 can be directed as required by the user, through a clockwise or counter clockwise rotation of the bodies.

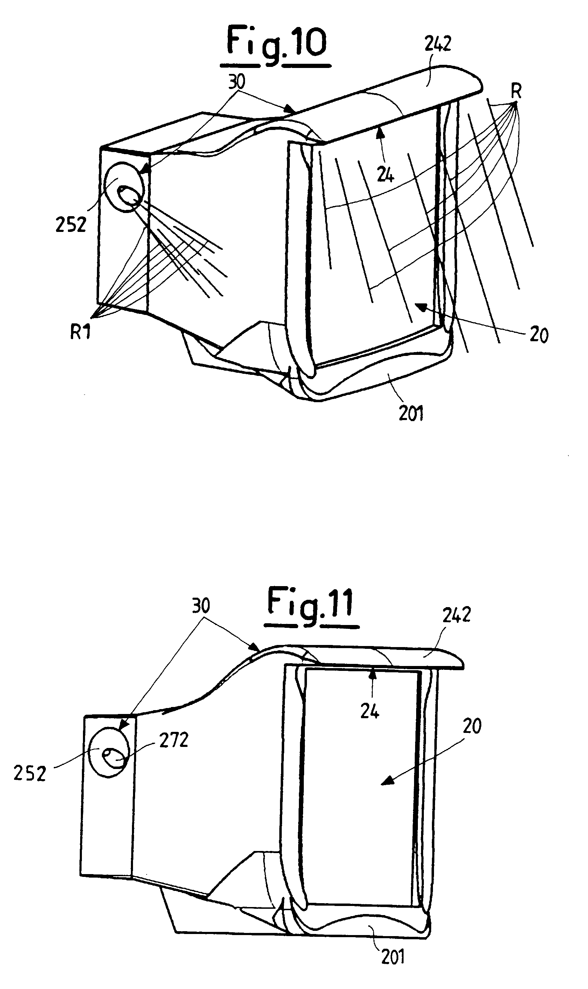

In Figures 10 and 11, it is shown a further embodiment of a lighting device 30 which is integral with a video terminal 201 of a computer 10.

In this case, a projection 242, having a slot 24 from which the light rays R come out and are directed towards the working area, is manufactured as an integral part of the video terminal 201 and is integrated with the upper portion of the display screen 20 along the width thereof, while spherical bodies 252 are provided in a back position compared to the previous embodiment, said bodies are provided with small transparent windows 272, which can be oriented in order to direct the light rays R1 towards the sides of the keyboard 15 of the computer 10. The features, as well as the advantages of the lighting device for environments provided with video terminals according to the present invention, should be evident from the above description. Said advantages are for instance:
- flexible, simple and quick operation, assembly and harness;
- possible use of the lighting device on display screen of existing computers, without having to modify the system;
- reliability from the point of view of the simplicity and easiness of use by the user;
- reduction of the eyes fatigue of the user, who reads the typed characters on the screen, in comparison to the known art;
- contained costs compared to the known art.

Finally, it is clear that several other changes can be introduced to the lighting device for environments provided with video terminals, in particular for working environments, object of the present invention, without leaving the innovative principles of the invention, and it is also clear that, in the embodiments of the invention, the materials, the shapes and the dimensions of the shown details can be any according to the needs and these details can be substituted by others technically equivalent.

## Claims

1. A lighting device (30) for environments provided with video terminals, in particular for working environments provided with video terminals of the type comprising an outer container made of plastic material and provided with at least one cooling grate (22), at least one inner light source (28), suitable to emit an electromagnetic radiation, which is diffused by said device (30), through diffusion means (27), characterised by further comprising at least one moving side tab (25, 26), which, in its rest position, is positioned inside said device (30) and, in its working position, extends along a longitudinal direction of said device (30), in such a way that said radiation is directed outside the device (30) through the inner walls of said tab (25, 26).

2. A device (30) as claimed in claim 1, characterised in that said diffusion means (27) are positioned below said tab (25, 26) and are formed by a plurality of blades or transparent screens, which form prismatic configurations suitable to diffuse the light.

3. A device (30) as claimed in claim 1, characterised in that said inner light source (28) is formed by a fluorescent tube.

4. A device (30) as claimed in claim 1, characterised by comprising two fluorescent light sources, as for instance two lamps and two moving and extendible tabs (25, 26).

5. A device (30) as claimed in claim 4, characterised in that said fluorescent tube is a U-shaped tube.

6. A device (30) as claimed in claims 4 or 5, characterised in that said two fluorescent lamps or the U ends of said fluorescent tube emit a light radiation along two directions longitudinal to the device (30), said directions being spaced and parallel to each other and according to two opposite directions, said radiation being directed towards two moving and extendible tabs (25, 26), which diffuse said light radiation outside the device (30), the light radiation of at least one of said fluorescent lamps or of at least one of the ends of the U-shaped tube is also directly directed outside the device (30) through at least a slot (24).

7. A device (30) as claimed in claim 6, characterised in that said slot (24) has an oval shape and is positioned below the device (30), in an area in front of said device.

8. A device (30) as claimed in claim 6, characterised in that said device can be positioned on the surface of at least a display screen (20) of a computer (10), in such a way that, in its working position, said two tabs (25, 26), once extended, project longitudinally from said surface and diffuse two light beams in a vertical direction, along the sides of said display screen (20), towards the working area of a work station for computers (10) or, more in general, for video terminals provided with at least a keyboard (15), said two tabs (25, 26) diffusing a third light beam, which goes through said slot (24) and is directed towards said keyboard (15).

9. A device (30) as claimed in claim 8, characterised in that the movement of said tabs (25, 26) is automatically realised when said device (30) is turned on, or when said computer (10) is turned on.

10. A device (30) as claimed in claim 8, characterised in that the movement of said tabs (25, 26) is provided manually by a user through specific adjustment means (21).

11. A device (30) as claimed in claim 4, characterised in that said two tabs (25, 26) are internally asymmetrical and that they have a different geometric shape.

12. A device (30) as claimed in claim 4, characterised in that each one of said tabs (25, 26) has at least a shaped element (40), which comprises a plurality of blades (27), parallel to each other and connected by at least one longitudinal element (43, 44), suitable to direct and/or absorb, at least partially, the light radiation.

13. A device (30) as claimed in claim 6, characterised in that said device can be integrated in at least a portion of the video terminal (201) of said computer (10), said video terminal (201) comprising the display screen (20) of said computer (10).
